# EUROPÄISCHE PATENTSCHRIFT

(11) **EP 2 771 151 B1**
(45) Veröffentlichungstag und Bekanntmachung des Hinweises auf die Patenterteilung: **09.09.2015**
(21) Anmeldenummer: 12773264.2
(22) Anmeldetag: 26.09.2012
(51) Int. Cl.: B25B 23/00, B25B 21/02

(54) **HANDWERKZEUGMASCHINE**
PORTABLE POWER TOOL
MACHINE-OUTIL À MAIN

(30) Priorität: 24.10.2011 DE 202011107082 U
(43) Veröffentlichungstag der Anmeldung: 03.09.2014
(73) Patentinhaber: Robert Bosch GmbH, 70442 Stuttgart (DE)
(72) Erfinder: HERRMANN, Falk, Hangzhou/ Bing Jiang District 310052 (CN); YEOH, Sim Teik, 11700 Gelugor Penang (MY); YEW, Chuan Cheong, 11900 Penang (MY); LIM, HuoyHuoy, 08000 Sg. Petani Kedah (MY)
(86) Internationale Anmeldenummer: PCT/EP2012/068935
(87) Internationale Veröffentlichungsnummer: WO 2013/060545

(56) Entgegenhaltungen:
- EP-A1- 2 039 449
- DE-A1-102010 002 353

## Beschreibung

### Stand der Technik

Die vorliegende Erfindung betrifft eine Handwerkzeugmaschine mit einer Abtriebswelle, an der eine Werkzeugaufnahme ausgebildet ist, die eine Mehrkant-Innenaufnahme und eine Mehrkant-Außenaufnahme aufweist, wobei die Mehrkant-Innenaufnahme zur Verbindung mit einem Einsatzwerkzeug ausgebildet ist, das mit einer der Werkzeugaufnahme zugeordneten Verriegelungsvorrichtung in der Mehrkant-Innenaufnahme verriegelbar ist, wobei die Verriegelungsvorrichtung eine Verriegelungshülse aufweist, die zur Entriegelung des Einsatzwerkzeugs gegen eine von einem zugeordneten Federelement aufgebrachte Federkraft in einer von der Handwerkzeugmaschine wegweisenden, axialen Richtung von einer Verriegelungsposition in eine Entriegelungsposition verschiebbar ist.

Aus der EP 2 039 449 A1 ist eine derartige, als Drehschlagschrauber ausgebildete Handwerkzeugmaschine bekannt, die eine mit einer Mehrkant-Innenaufnahme und einer Mehrkant-Außenaufnahme versehene Werkzeugaufnahme aufweist, wobei die Mehrkant-Innenaufnahme mit einem Einsatzwerkzeug mit einer Außenmehrkant-Kupplung, z. B. einem Schrauberbit, und die Mehrkant-Außenaufnahme mit einem Einsatzwerkzeug mit einer Innenmehrkant-Kupplung, z. B. einem Steckschlüssel, verbindbar ist. Zur Fixierung eines Schrauberbits in der Mehrkant-Innenaufnahme ist eine Verriegelungsvorrichtung vorgesehen, bei der eine Verriegelungshülse mittels einer zugeordneten Kompressionsfeder in eine vom Schrauberbit wegweisende axiale Richtung vorgespannt wird und zum Entriegeln sowie zur Entnahme des Schrauberbits gegen die Kraft dieser Feder axial in Richtung des Schrauberbits von einer Verriegelungsposition in eine Entriegelungsposition geschoben werden muss.

Nachteilig am Stand der Technik ist, dass die Handhabung der Handwerkzeugmaschine umständlich und schwierig ist, da die Verriegelungshülse in axialer Richtung nur eine vergleichsweise kurze Länge und einen vergleichsweise geringen Durchmesser aufweist und somit bei einer Verschiebung von der Verriegelungsposition in die Entriegelungsposition schwer zu greifen und zu halten ist. Dies führt zu Komforteinbussen bei der Benutzung einer derartigen Handwerkzeugmaschine.

### Offenbarung der Erfindung

Eine Aufgabe der Erfindung ist es daher, eine neue Handwerkzeugmaschine bereitzustellen, die eine Werkzeugaufnahme mit einer Mehrkant-Innenaufnahme und einer Verriegelungsvorrichtung aufweist, die einfach und komfortabel zu bedienen ist und insbesondere bei einer Entriegelung eine sichere und zuverlässige Entnahme zugeordneter Einsatzwerkzeuge ermöglicht.

Dieses Problem wird gelöst durch eine Handwerkzeugmaschine mit einer Abtriebswelle, an der eine Werkzeugaufnahme ausgebildet ist, die eine Mehrkant-Innenaufnahme und eine Mehrkant-Außenaufnahme aufweist. Die Mehrkant-Innenaufnahme ist zur Verbindung mit einem Einsatzwerkzeug ausgebildet, das mit einer der Werkzeugaufnahme zugeordneten Verriegelungsvorrichtung in der Mehrkant-Innenaufnahme verriegelbar ist. Die Verriegelungsvorrichtung weist eine Verriegelungshülse auf, die zur Entriegelung des Einsatzwerkzeugs gegen eine von einem zugeordneten Federelement aufgebrachte Federkraft in einer von der Handwerkzeugmaschine wegweisenden, axialen Richtung von einer Verriegelungsposition in eine Entriegelungsposition verschiebbar ist. Die Verriegelungshülse weist ein Betätigungsglied und ein Halteglied auf, die über eine Gewindeverbindung miteinander verbunden sind, wobei das Halteglied von dem zugeordneten Federelement in Richtung der Verriegelungsposition der Verriegelungshülse beaufschlagt wird. Das Betätigungsglied ist dazu ausgebildet, eine Verschiebung der Verriegelungshülse von der Verriegelungsposition in die Entriegelungsposition zu ermöglichen.

Die Erfindung ermöglicht somit die Bereitstellung einer Handwerkzeugmaschine, deren Werkzeugaufnahme eine Verriegelungsvorrichtung mit einer Verriegelungshülse aufweist, die durch eine zweiteilige Ausgestaltung eine vergrößerte Länge in axialer Richtung sowie einen vergrößerten Durchmesser aufweist und somit vergleichsweise komfortabel und sicher zu handhaben ist.

Bevorzugt weist das Betätigungsglied ein zumindest abschnittsweise spiralförmig ausgebildetes Innengewinde auf, das zur Ausbildung der Gewindeverbindung auf ein zumindest abschnittsweise spiralförmig ausgebildetes Außengewinde des Halteglieds aufgeschraubt ist.

Somit kann die Bereitstellung einer zweiteiligen Verriegelungshülse ermöglicht werden, deren Einzelkomponenten über eine stabile und robuste Gewindeverbindung miteinander verbindbar sind.

Alternativ hierzu kann das Betätigungsglied ein zumindest abschnittsweise aus konzentrischen Wellen ausgebildetes Innengewinde aufweisen, das zur Ausbildung der Gewindeverbindung auf ein zumindest abschnittsweise aus konzentrischen Wellen ausgebildetes Außengewinde des Halteglieds aufgepresst ist.

Somit kann die Bereitstellung einer zweiteiligen Verriegelungshülse ermöglicht werden, deren Einzelkomponenten über eine zuverlässige Gewindeverbindung schnell und unkompliziert miteinander verbindbar sind.

Gemäß einer Ausführungsform weist das Betätigungsglied ein erstes Montagehilfsglied und das Halteglied ein zweites Montagehilfsglied auf. Das erste und zweite Montagehilfsglied sind bevorzugt dazu ausgebildet, eine Befestigung des Betätigungsglieds am Halteglied zumindest zu erleichtern.

Die Erfindung ermöglicht somit die Bereitstellung einer zweiteiligen Verriegelungshülse, deren Einzelkomponenten durch die Bereitstellung geeigneter Montagehilfsglieder auf einfache Art und Weise aneinander befestigbar sind.

Bevorzugt sind das erste und zweite Montagehilfsglied nach Art von Achtkant-Außenumfängen ausgebildet.

Somit kann die Bereitstellung von unkomplizierten und kostengünstigen Montagehilfsgliedern ermöglicht werden.

Gemäß einer Ausführungsform ist der Gewindeverbindung ein Dämpfelement zur Dämpfung von im Bereich der Gewindeverbindung im Betrieb der Handwerkzeugmaschine auftretenden Vibrationen zugeordnet.

Die Erfindung ermöglicht somit die Bereitstellung einer zweiteiligen Verriegelungshülse, bei der eine durch im Betrieb der Handwerkzeugmaschine auftretende Vibrationen bewirkte Lösung bzw. Trennung von deren Einzelkomponenten voneinander sicher und zuverlässig verhindert werden kann.

Bevorzugt weist das Dämpfelement einen Anti-Vibrations-Lack auf.

Somit kann ein kostengünstiges sowie schnell und einfach auftragbares Dämpfelement Anwendung finden.

Gemäß einer Ausführungsform sind der Verriegelungsvorrichtung mindestens zwei Verriegelungselemente zugeordnet, die in der Verriegelungsposition der Verriegelungshülse von der Betätigungshülse in eine zugeordnete Verriegelungsstellung beaufschlagt werden.

Die Erfindung ermöglicht somit die Bereitstellung einer robusten und stabilen Verriegelungsvorrichtung.

Das Betätigungsglied weist bevorzugt einen äußeren Griffbereich auf.

Somit kann die Bereitstellung einer komfortabel betätigbaren Verriegelungshülse ermöglicht werden.

Das Eingangs genannte Problem wird auch gelöst durch eine Werkzeugaufnahme, die eine Mehrkant-Innenaufnahme und eine Mehrkant-Außenaufnahme aufweist. Die Mehrkant-Innenaufnahme ist zur Verbindung mit einem Einsatzwerkzeug ausgebildet, das mit einer der Werkzeugaufnahme zugeordneten Verriegelungsvorrichtung in der Mehrkant-Innenaufnahme verriegelbar ist. Die Verriegelungsvorrichtung weist eine Verriegelungshülse auf, die zur Entriegelung des Einsatzwerkzeugs gegen eine von einem zugeordneten Federelement aufgebrachte Federkraft in einer von einer zugeordneten Handwerkzeugmaschine wegweisenden, axialen Richtung von einer Verriegelungsposition in eine Entriegelungsposition verschiebbar ist. Die Verriegelungshülse weist ein Betätigungsglied und ein Halteglied auf, die über eine Gewindeverbindung miteinander verbunden sind, wobei das Halteglied von dem zugeordneten Federelement in Richtung der Verriegelungsposition der Verriegelungshülse beaufschlagt wird. Das Betätigungsglied ist dazu ausgebildet, eine Verschiebung der Verriegelungshülse von der Verriegelungsposition in die Entriegelungsposition zu ermöglichen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einem Einsatzwerkzeug gemäß einer Ausführungsform,
Fig. 2 eine perspektivische Ansicht der Abtriebswelle mit der Werkzeugaufnahme von Fig. 1, mit einer Verriegelungsvorrichtung gemäß einer Ausführungsform,
Fig. 3 eine Schnittansicht der Abtriebswelle mit der Werkzeugaufnahme und dem Einsatzwerkzeug von Fig. 1, sowie der Verriegelungsvorrichtung von Fig. 2,
Fig. 4 die Schnittansicht von Fig. 3 in vergrößerter Form, ohne das Einsatzwerkzeug von Fig. 1,
Fig. 5A eine perspektivische Ansicht des Betätigungsglieds der Verriegelungshülse von Fig. 2 bis 4, und
Fig. 5B eine perspektivische Ansicht des Halteglieds der Verriegelungshülse von Fig. 2 bis 4.

### Beschreibung der Ausführungsbeispiele

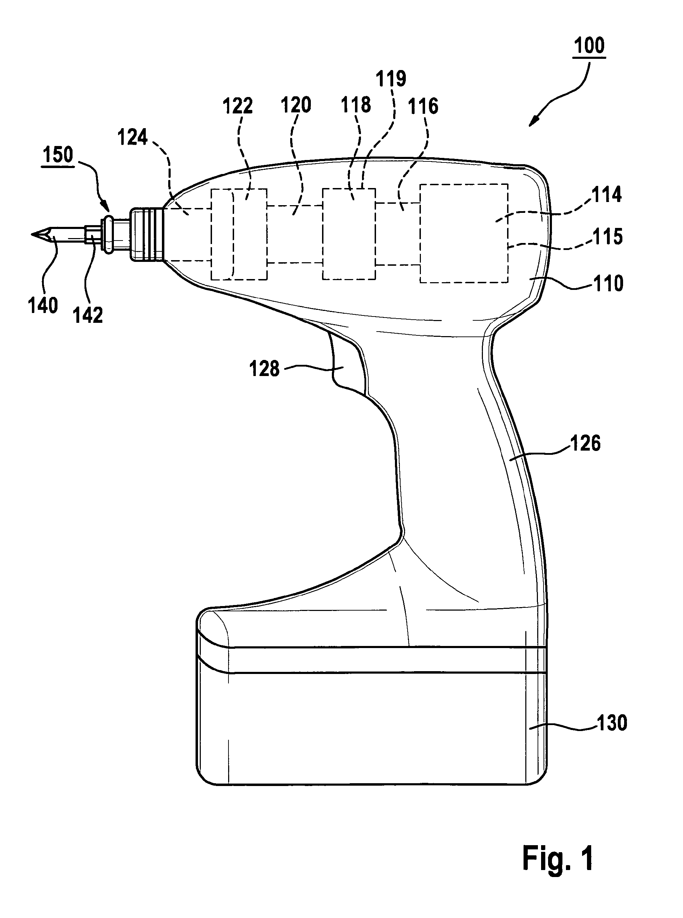

Fig. 1 zeigt eine mit einer Werkzeugaufnahme 150 versehene Handwerkzeugmaschine 100, die ein Gehäuse 110 mit einem Handgriff 126 aufweist. Gemäß einer Ausführungsform ist die Handwerkzeugmaschine 100 zur netzunabhängigen Stromversorgung mechanisch und elektrisch mit einem Akkupack 130 verbindbar.

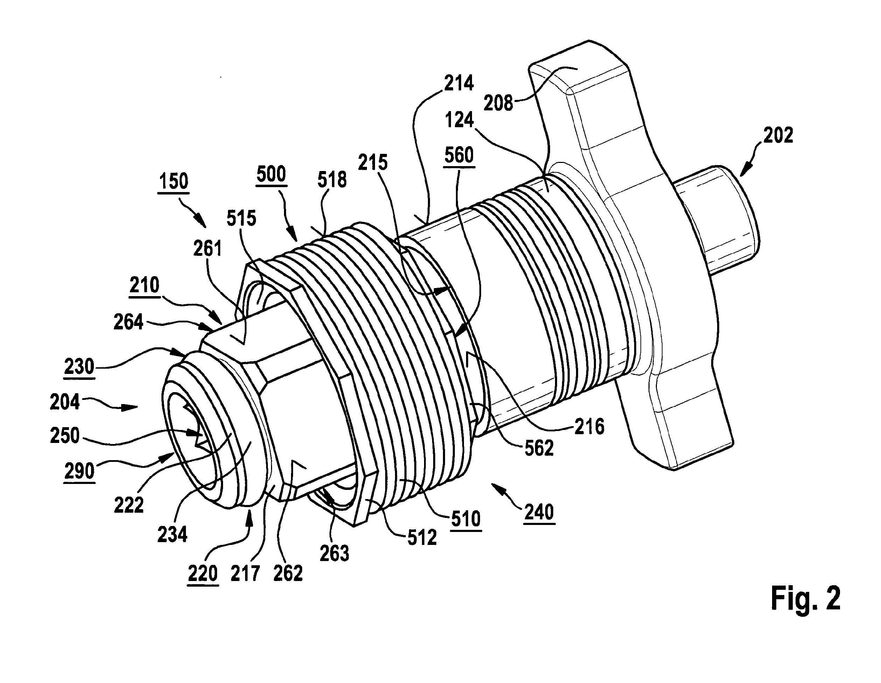

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Elektrowerkzeugen Anwendung finden kann, bei denen ein Werkzeug in Drehungen versetzt wird, z. B. bei einem Schrauber, einem Bohrschrauber, einer Schlagbohrmaschine etc., unabhängig davon, ob das Elektrowerkzeug netzunabhängig mit einem Akkupack oder netzabhängig betreibbar ist. Darüber hinaus wird darauf hingewiesen, dass die vorliegende Erfindung nicht auf motorbetriebene Handwerkzeugmaschinen beschränkt ist, sondern allgemein bei Werkzeugen verwendbar ist, bei denen die bei Fig. 2 bis 4 beschriebene Werkzeugaufnahme 150 Anwendung finden kann.

In dem Gehäuse 110 sind ein von dem Akkupack 130 mit Strom versorgter, elektrischer Antriebsmotor 114, ein Getriebe 118 und ein Schlagwerk 122 angeordnet. Der Antriebsmotor 114 ist z. B. über einen Handschalter 128 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 114 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Der Antriebsmotor 114 ist über eine zugeordnete Motorwelle 116 mit dem Getriebe 118 verbunden, das eine Drehung der Motorwelle 116 in eine Drehung eines zwischen Getriebe 118 und Schlagwerk 122 vorgesehenen Antriebsglieds 120, z. B. einer Antriebswelle, umwandelt. Diese Umwandlung erfolgt bevorzugt derart, dass das Antriebsglied 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Das mit dem Antriebsglied 120 verbundene Schlagwerk 122 ist beispielhaft ein Dreh- bzw. Rotationsschlagwerk, das schlagartige Drehimpulse mit hoher Intensität erzeugt und auf eine Abtriebswelle 124, z. B. eine Abtriebsspindel, überträgt. An der Abtriebswelle 124 ist die Werkzeugaufnahme 150 vorgesehen, die bevorzugt zur Aufnahme von Einsatzwerkzeugen ausgebildet ist und gemäß einer Ausführungsform sowohl mit einem Einsatzwerkzeug 140 mit Außenmehrkant-Kupplung 142, als auch mit einem Einsatzwerkzeug mit Innenmehrkant-Kupplung, z. B. einem Steckschlüssel, verbindbar ist. Das Einsatzwerkzeug 140 ist beispielhaft als Schrauberbit mit der illustrativ als Sechskant-Kupplung ausgeführten Außenmehrkant-Kupplung 142 ausgebildet, die in einer geeigneten Innenaufnahme (290 in Fig. 2) der Werkzeugaufnahme 150 angeordnet ist. Ein derartiges Schrauberbit ist hinreichend aus dem Stand der Technik bekannt, sodass hier zwecks Knappheit der Beschreibung auf eine eingehende Beschreibung verzichtet wird.

Fig. 2 zeigt die mit der Werkzeugaufnahme 150 versehene Abtriebswelle 124 von Fig. 1, deren mit einem Abtriebsnocken 208 versehener proximaler Endbereich 202 in Fig. 1 mit dem Schlagwerk 122 der Handwerkzeugmaschine 100 verbunden ist. Im distalen Endbereich 204 der Abtriebswelle 124 ist gemäß einer Ausführungsform eine axiale Erweiterung 220 ausgebildet. Diese ist vorzugsweise an die mit einer Außenaufnahme 210 und einer Innenaufnahme 290 versehene Werkzeugaufnahme 150 angeformt und bevorzugt einstückig mit dieser ausgebildet.

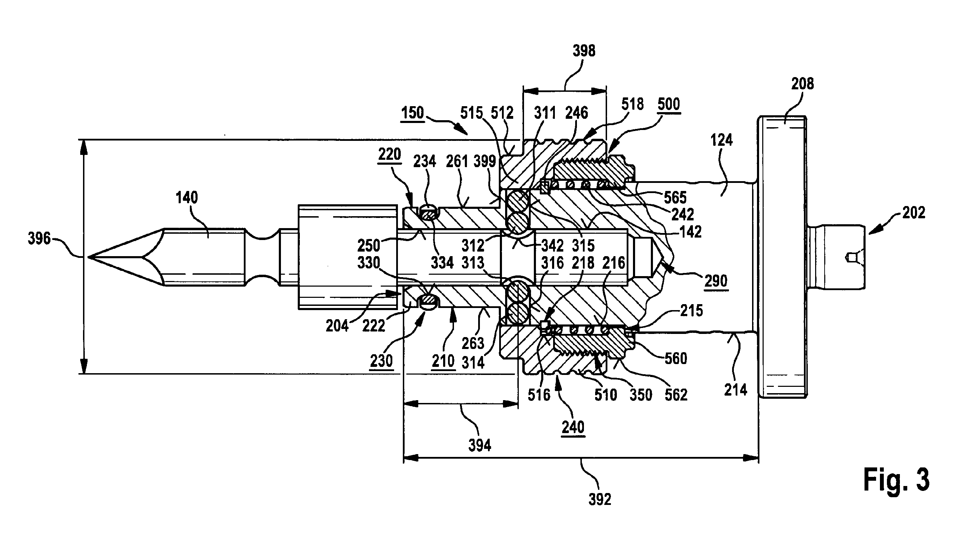

Gemäß einer Ausführungsform weist die Abtriebswelle 124 ausgehend von dem Abtriebsnocken 208 in Richtung des distalen Endbereichs 204 einen ersten bevorzugt zylinderförmigen Abschnitt 214 mit einem ersten Durchmesser D1 auf. An einer ersten ringförmigen Schulter 215 verjüngt sich die Welle 124 und geht in einen zweiten zylinderförmigen Abschnitt 216 mit einem zweiten Durchmesser D2 über, mit D2 < D1. An einer zweiten ringförmigen Schulter (399 in Fig. 3) verjüngt sich die Abtriebswelle 124 erneut und geht in die Außenaufnahme 210 über, die ihrerseits an einer dritten ringförmigen Schulter 217 in die axiale Erweiterung 220 übergeht.

Die mit der Außenaufnahme 210 und der Innenaufnahme 290 versehene Werkzeugaufnahme 150 ist illustrativ an die Abtriebswelle 124 angeformt und bevorzugt einstückig mit dieser ausgebildet. Der Außenaufnahme 210 ist ein bevorzugt elastisch verformbares Halteelement 230 und der Innenaufnahme 290 eine betätigbare Verriegelungsvorrichtung 240 zugeordnet.

Die Außenaufnahme 210 ist beispielhaft eine Mehrkant-Außenaufnahme, bevorzugt eine Vierkant-Außenaufnahme, die in radialer Richtung gesehen illustrativ vier vorzugsweise plane Seitenflächen 261, 262, 263, 264 aufweist und gemäß einer Ausführungsform zur Aufnahme eines gemäß europäischen oder nordamerikanischen Industriestandards hergestellten Einsatzwerkzeugs mit Innenmehrkant-Kupplung, z. B. eines Steckschlüssels, ausgebildet ist. Die Seitenflächen 261, 262, 263, 264 sind illustrativ über abgeschrägte Kanten miteinander verbunden.

In Richtung des distalen Endbereichs 204 der Abtriebswelle 124 geht die Außenaufnahme 210 in die axiale Erweiterung 220 über. Diese hat beispielhaft einen Abschlusskragen 222, der ein in Richtung des distalen Endbereichs 204 konusförmig abgeschrägtes Ende aufweist. Der Durchmesser dieses Abschlusskragens 222 kann derart vorgegeben sein, dass dieser geringer als der Abstand zwischen zwei gegenüberliegenden Seitenflächen der Außenaufnahme 210 ist, z. B. der Abstand zwischen den Seitenflächen 261 und 263 oder 262 und 264.

Zur Fixierung eines gemäß europäischen oder nordamerikanischen Industriestandards hergestellten Einsatzwerkzeugs mit Innenmehrkant-Kupplung, z. B. eines Steckschlüssels, an der Außenaufnahme 210 ist im Bereich der axialen Erweiterung 220 das Halteelement 230 befestigt. Dieses weist illustrativ ein Fixierglied 234 auf, das bevorzugt als elastisch verformbarer, metallener C-Ring ausgebildet ist.

Die Innenaufnahme 290 ist beispielhaft nach Art einer Mehrkant-Innenaufnahme im Inneren der Abtriebswelle 124 ausgebildet und dient zur Aufnahme des Schrauberbits 140 von Fig. 1. Illustrativ weist die Innenaufnahme 290 ein Sechskant-Innenprofil 250 auf. Der Innenaufnahme 290 ist die über ein bevorzugt als Verriegelungshülse ausgeführtes Betätigungselement 500 betätigbare Verriegelungsvorrichtung 240 zur Verriegelung des Schrauberbits 140 von Fig. 1 zugeordnet.

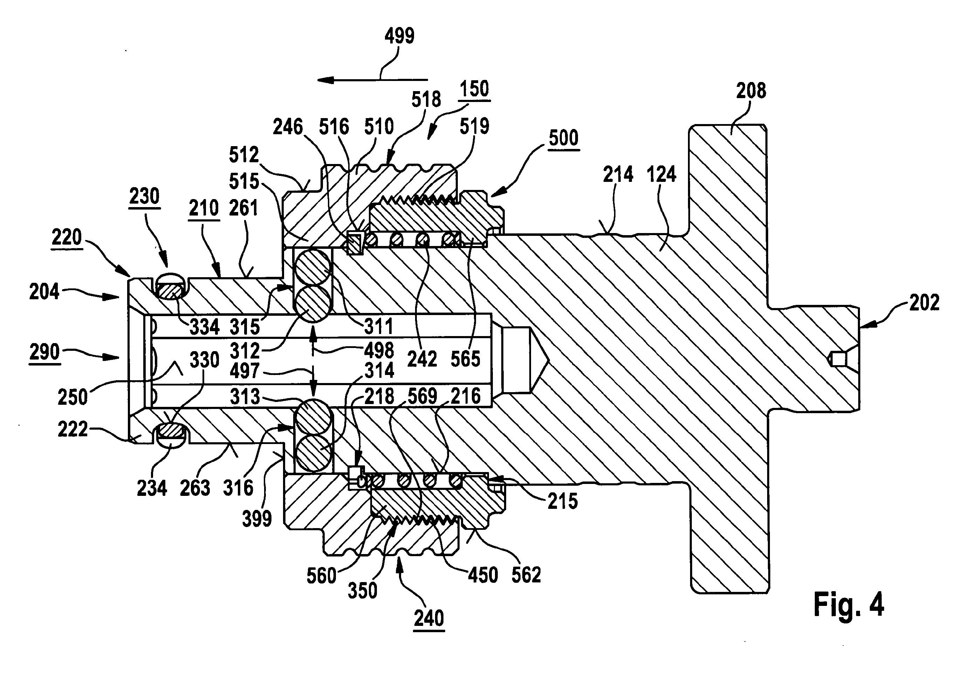

Gemäß einer Ausführungsform ist die Verriegelungshülse 500 zur Entriegelung des Einsatzwerkzeugs 140 gegen eine von einem zugeordneten Federelement (242 in Fig. 3) aufgebrachte Federkraft in Richtung des distalen Endbereichs 204 (499 in Fig. 4) von einer Verriegelungsposition in eine Entriegelungsposition verschiebbar. Illustrativ ist die Verriegelungshülse 500 zweiteilig ausgebildet und weist ein mit einer inneren Ringschulter 515 und einem äußeren Griffbereich 518 versehenes Betätigungsglied 510 auf, das an einem zugeordneten Halteglied 560 befestigt ist.

Dem Betätigungsglied 510 ist beispielhaft ein erstes Montagehilfsglied 512 und dem Halteglied 560 ein zweites Montagehilfsglied 562 zugeordnet. Das erste Montagehilfsglied 512 ist beispielhaft im Bereich der inneren Ringschulter 515 an einem axialen Ende des Betätigungsglieds 510 angeordnet, das illustrativ dem Einsatzwerkzeug 140 zugewandt ist. Das zweite Montagehilfsglied 562 ist beispielhaft an einem dem proximalen Endbereich 202 der Abtriebswelle 124 zugewandten axialen Ende des Halteglieds 560 angeordnet.

Das erste und zweite Montagehilfsglied 512, 562 sind dazu ausgebildet, eine Befestigung des Betätigungsglieds 510 am Halteglied 560 zumindest zu erleichtern. Illustrativ sind das erste und zweite Montagehilfsglied 512, 562 nach Art von Achtkant-Außenumfängen ausgebildet, die z. B. mithilfe geeigneter Achtkant-Schraubenschlüssel bei einer Montage der Verriegelungshülse 500 greifbar sind.

Fig. 3 zeigt die Anordnung von Fig. 2 mit der Abtriebswelle 124, der die Verriegelungsvorrichtung 240 sowie das Halteelement 230 aufweisenden Werkzeugaufnahme 150, und dem Einsatzwerkzeug 140 von Fig. 1. Das Halteelement 230 weist illustrativ den metallenen C-Ring 234 von Fig. 2 und ein bevorzugt als O-Ring aus einem elastischen Gummimaterial ausgebildetes Federelement 334 auf, die in einer zugeordneten Ringnut 330 der axialen Erweiterung 220 angeordnet sind. Der O-Ring 334 dient dazu, nach einer Montage den C-Ring 234 radial mit einer vorgegebenen Federkraft zu beaufschlagen.

Illustrativ ist die Außenmehrkant-Kupplung 142 des Einsatzwerkzeugs 140 im Sechskant-Innenprofil 250 der Mehrkant-Innenaufnahme 290 der Werkzeugaufnahme 150 verriegelt. Hierzu weist das Einsatzwerkzeug 140 beispielhaft eine im Bereich der Außenmehrkant-Kupplung 142 z. B. gemäß DIN 3126-E6.3 vorgesehene, äußere Ringnut 342 auf, in die gemäß einer Ausführungsform mindestens zwei Verriegelungselemente 312, 313 eingreifen. Diese Verriegelungselemente 312, 313 sowie zwei weitere Verriegelungselemente 311, 314, die alle illustrativ nach Art von Verriegelungskugeln ausgebildet sind, sind beispielhaft zumindest in einer ersten und einer zweiten, z. B. im Bereich einer zweiten Schulter 399 am zweiten zylinderförmigen Abschnitt 216 der Abtriebswelle 124 ausgebildeten, radialen Öffnung 315 bzw. 316 angeordnet, wobei die Kugeln 311, 312 in die Öffnung 315 und die Kugeln 313, 314 in die Öffnung 316 der Abtriebswelle 124 eingeführt sind. Hierbei ist die zweite radiale Öffnung 316 beispielhaft diametral gegenüberliegend zur ersten radialen Öffnung 315 liegend ausgebildet.

Die Verriegelungskugeln 311, 312, 313, 314 werden von der Verriegelungshülse 500 in den Öffnungen 315 bzw. 316 gehalten, wobei die Kugeln 311, 312, 313, 314 von der inneren Ringschulter 515 des Betätigungsglieds 510 der Verriegelungshülse 500 in eine zugeordnete Verriegelungsstellung beaufschlagt werden. Diese ist einer Verriegelungsposition der Verriegelungshülse 500 bzw. der Verriegelungsvorrichtung 240 zugeordnet.

Die Verriegelungsvorrichtung 240 weist illustrativ die aus dem Betätigungsglied 510 und dem Halteglied 560 ausgebildete Verriegelungshülse 244 und die Verriegelungskugeln 311, 312, 313, 314 auf. Darüber hinaus weist die Verriegelungsvorrichtung 240 ein beispielhaft als Kompressionsfeder ausgebildetes und im Inneren der Verriegelungshülse 244 angeordnetes Federelement 242 und ein beispielhaft als C-Ring ausgebildetes und in einer am Außenumfang der Abtriebswelle 124 vorgesehenen Ringnut 218 angeordnetes Rückhalteelement 246 auf.

Gemäß einer Ausführungsform sind das Betätigungsglied 510 und das Halteglied 560 der Verriegelungshülse 500 jeweils hülsenförmig ausgebildet und über eine Gewindeverbindung 350 miteinander verbunden. Hierzu weist das Betätigungsglied 510 z. B. ein zumindest abschnittsweise spiralförmig ausgebildetes Innengewinde (519 in Fig. 4) auf, das zur Ausbildung der Gewindeverbindung 350 auf ein zumindest abschnittsweise spiralförmig ausgebildetes Außengewinde (569 in Fig. 4) des Halteglieds 560 aufgeschraubt ist. Es wird jedoch darauf hingewiesen, dass die Verwendung eines spiralförmig ausgebildeten Innen- und Außengewindes lediglich beispielhaften Charakter hat und nicht als Einschränkung der Erfindung zu verstehen ist. Vielmehr können auch andere Gewindetypen bzw. Befestigungsformen Anwendung finden. Z. B. können das Innengewinde (519 in Fig. 4) des Betätigungsglieds 510 und das Außengewinde (569 in Fig. 4) des Halteglieds 560 jeweils zumindest abschnittsweise aus konzentrischen Wellen ausgebildet sein, wobei das Außengewinde (569 in Fig. 4) auf das Innengewinde (519 in Fig. 4) aufgepresst ist. Darüber hinaus ist z. B. auch ein Verschrauben des Betätigungsglieds 510 mit dem Halteglied 560 mittels radial eingeschraubter Schrauben, radial eingepresster und/oder verklebter bzw. verschweißter Stifte, oder über verklebte und/oder verschweißte Quer, bzw. Tangentialstifte realisierbar.

Gemäß einer Ausführungsform wird das mit einer im Bereich des Montagehilfsglieds 562 mit einer ringförmigen Innenschulter 565 versehene Halteglied 560 von dem illustrativ zwischen dem Rückhalteelement 246 und der Innenschulter 565 angeordneten Federelement 242 in Richtung der Verriegelungsposition der Verriegelungshülse 500 beaufschlagt, d. h. in Richtung des proximalen Endbereichs 202 der Abtriebswelle 124 gegen die erste ringförmige Schulter 215. Um eine Verschiebung der Verriegelungshülse 500 von dieser Verriegelungsposition in die Entriegelungsposition zu ermöglichen, ist das Betätigungsglied 510 vorgesehen. Dieses kann von einem Benutzer an seinem Griffbereich 518 gegriffen werden und mit dem Halteglied 560 gegen die von dem Federelement 242 aufgebrachte Federkraft in Richtung des distalen Endbereichs 204 der Abtriebswelle 124 verschoben werden.

In der Entriegelungsposition gibt die innere Ringschulter 515 des Betätigungsglieds 510 die Verriegelungskugeln 311, 312, 313, 314 frei. Diese sind somit bei einem Entfernen des Einsatzwerkzeugs 140 aus der Mehrkant-Innenaufnahme 290 in den zugeordneten radialen Öffnungen 315 bzw. 316 der Abtriebswelle 124 nach radial auswärts in Richtung eines an die innere Ringschulter 515 anschließenden, verbreiterten Innenumfangs 516 des Betätigungsglieds 510 verschiebbar und können somit aus der Ringnut 342 des Einsatzwerkzeugs 140 austreten bzw. -rollen, sodass dieses freigegeben wird.

Gemäß einer Ausführungsform weist das Betätigungsglied 510 an seinem Außenumfang einen Durchmesser 396 von mindestens 30 mm auf und sein Griffbereich 518 in axialer Richtung hat eine Länge 398 von mindestens 10 mm, illustrativ von z. B. 10,4 mm. Somit können der Durchmesser 396 und die Länge 398 in Bezug auf gebräuchliche Betätigungshülsen signifikant vergrößert werden, deren Durchmesser und Länge bei gebräuchlichen Akku-Drehschlagschraubern meist bei weniger als 23 mm bzw. 9 mm liegen. Darüber hinaus beträgt die axiale Länge 392 der Abtriebswelle 124 zwischen deren distalem Endbereich 204 und dem Abtriebsnocken 208 beispielhaft nicht mehr als 43 mm und die axiale Länge 394 zwischen dem distalem Endbereich 204 und einem entsprechenden Öffnungsmittelpunkt der radialen Öffnungen 315, 316 beträgt beispielhaft nicht mehr als 14 mm. Somit können auch die Längen 392, 394 signifikant verkürzt werden, die bei gebräuchlichen Akku-Drehschlagschraubern meist bei mindestens 44 mm bzw. mehr als 25 mm liegen.

Fig. 4 zeigt die Anordnung von Fig. 3 ohne das Einsatzwerkzeug 140 zur Verdeutlichung einer beispielhaften Funktionsweise der Verriegelungsvorrichtung 240 sowie einer beispielhaften Ausgestaltung der Gewindeverbindung 350. Diese wird illustrativ durch ein am Innenumfang des Betätigungsglieds 510 wie bei Fig. 3 beschrieben ausgebildetes Innengewinde 510 und ein am Außenumfang des Halteglieds 560 wie bei Fig. 3 beschrieben ausgebildetes Außengewinde 569 ausgebildet und ist beispielhaft mit einem Dämpfelement 450 zur Dämpfung von im Bereich der Gewindeverbindung 350 im Betrieb der Handwerkzeugmaschine 100 von Fig. 1 auftretenden Vibrationen versehen. Das Dämpfelement 450 kann z. B. einen Anti-Vibrations-Lack aufweisen.

Die Verriegelungsvorrichtung 240 ist illustrativ in ihrer Verriegelungsposition gezeigt, in der das Federelement 242 das Halteglied 560 und somit die Verriegelungshülse 500 gegen die erste ringförmige Schulter 215 drückt, sodass die innere Ringschulter des Betätigungsglieds 510 die Verriegelungskugeln 311, 312, 313, 314 in den Öffnungen 315 bzw. 316 radial einwärts beaufschlagt. Bei einer wie bei Fig. 3 beschriebenen Verschiebung der Verriegelungshülse 500 in die Entriegelungsposition, wie illustrativ mit einem Pfeil 499 angedeutet, werden die Verriegelungskugeln 311, 312, 313, 314 freigegeben und können somit radial auswärts in Richtung des verbreiterten Innenumfangs 516 des Betätigungsglieds 510 verschoben werden, wie mit Pfeilen 497, 498 angedeutet.

Bei einer beispielhaften Montage der Verriegelungsvorrichtung 240 an der Werkzeugaufnahme 150 bzw. der Abtriebswelle 124 wird zunächst das Halteglied 560, dann das Federelement 242 und anschließend der Rückhalte-C-Ring 246 in Richtung des Abtriebsnockens 208 auf die Abtriebswelle 124 aufgeschoben, bis der Rückhalte-C-Ring 246 in die Ringnut 218 eingreift und somit dort axial fixiert ist. Dann wird nach Einführen der Kugeln 311, 312, 313, 314 in die Öffnungen 315 bzw. 316 das Betätigungsglied 510 an dem Halteglied 560 befestigt, z. B. unter Verwendung der Montagehilfsglieder 512, 562.

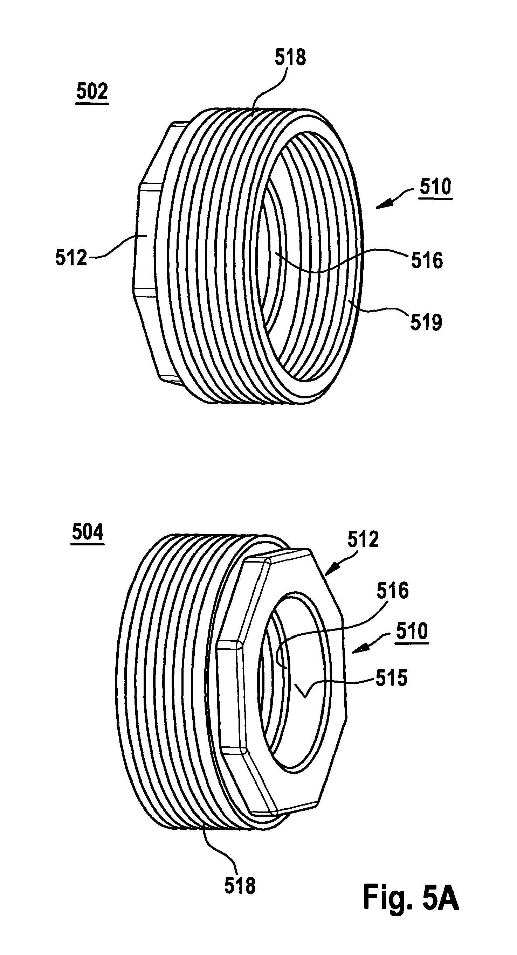

Fig. 5A zeigt eine erste perspektivische Ansicht 502 des Betätigungsglieds 510 von Fig. 2 bis 4 zur Verdeutlichung eines beispielhaft daran vorgesehenen Innengewindes 519, das wie bei Fig. 3 beschrieben ausgebildet sein kann. Darüber hinaus zeigt Fig. 5A eine zweite perspektivische Ansicht 504 des Betätigungsglieds 510 zur Verdeutlichung einer beispielhaften Ausgestaltung von dessen Griffbereich 518 sowie von dessen Montagehilfsglied 512.

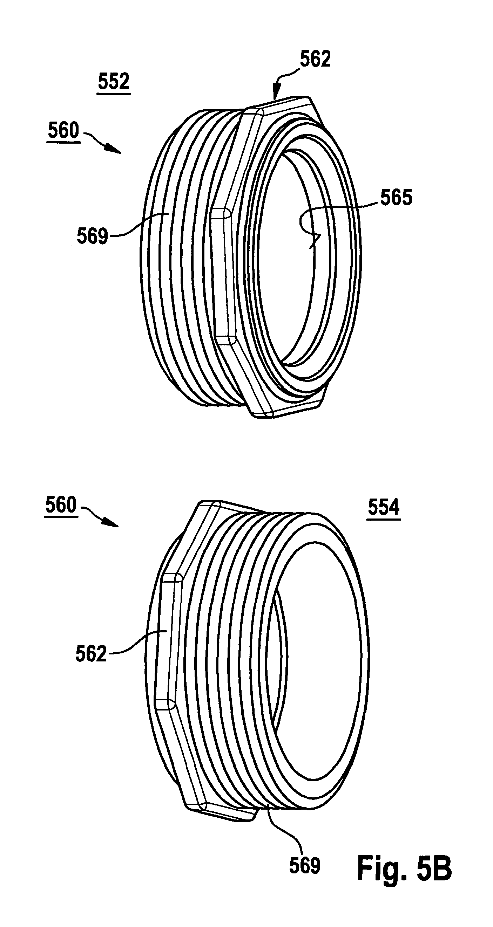

Fig. 5B zeigt eine erste und eine zweite perspektivische Ansicht 552, 554 des Halteglieds 560 von Fig. 2 bis 4 zur Verdeutlichung eines beispielhaft daran vorgesehenen Außengewindes 569, das wie bei Fig. 3 beschrieben ausgebildet sein kann, sowie von dessen Montagehilfsglied 562.

## Patentansprüche

1. Handwerkzeugmaschine (100) mit einer Abtriebswelle (124), an der eine Werkzeugaufnahme (150) ausgebildet ist, die eine Mehrkant-Innenaufnahme (290) und eine Mehrkant-Außenaufnahme (210) aufweist, wobei die Mehrkant-Innenaufnahme (290) zur Verbindung mit einem Einsatzwerkzeug (140) ausgebildet ist, das mit einer der Werkzeugaufnahme (150) zugeordneten Verriegelungsvorrichtung (240) in der Mehrkant-Innenaufnahme (290) verriegelbar ist, wobei die Verriegelungsvorrichtung (240) eine Verriegelungshülse (500) aufweist, die zur Entriegelung des Einsatzwerkzeugs (140) gegen eine von einem zugeordneten Federelement (242) aufgebrachte Federkraft in einer von der Handwerkzeugmaschine (100) wegweisenden, axialen Richtung (499) von einer Verriegelungsposition in eine Entriegelungsposition verschiebbar ist, **dadurch gekennzeichnet, dass** die Verriegelungshülse (500) ein Betätigungsglied (510) und ein Halteglied (560) aufweist, die über eine Gewindeverbindung (350) miteinander verbunden sind, wobei das Halteglied (560) von dem zugeordneten Federelement (242) in Richtung der Verriegelüngsposition der Verriegelungshülse (500) beaufschlagt wird und das Betätigungsglied (510) dazu ausgebildet ist, eine Verschiebung der Verriegelungshülse (500) von der Verriegelungsposition in die Entriegelungsposition zu ermöglichen.

2. Handwerkzeugmaschine nach Anspruch 1, **dadurch gekennzeichnet, dass** das Betätigungsglied (510) ein zumindest abschnittsweise spiralförmig ausgebildetes Innengewinde (519) aufweist, das zur Ausbildung der Gewindeverbindung (350) auf ein zumindest abschnittsweise spiralförmig ausgebildetes Außengewinde (569) des Halteglieds (560) aufgeschraubt ist.

3. Handwerkzeugmaschine nach Anspruch 1, **dadurch gekennzeichnet, dass** das Betätigungsglied (510) ein zumindest abschnittsweise aus konzentrischen Wellen ausgebildetes Innengewinde (519) aufweist, das zur Ausbildung der Gewindeverbindung (350) auf ein zumindest abschnittsweise aus konzentrischen Wellen ausgebildetes Außengewinde (569) des Halteglieds (560) aufgepresst ist.

4. Handwerkzeugmaschine nach einem der vorhergehenden Ansprüche, **dadurch gekennzeichnet, dass** das Betätigungsglied (510) ein erstes Montagehilfsglied (512) und das Halteglied (560) ein zweites Montagehilfsglied (562) aufweist, wobei das erste und zweite Montagehilfsglied (512, 562) dazu ausgebildet sind, eine Befestigung des Betätigungsglieds (510) am Halteglied (560) zumindest zu erleichtern.

5. Handwerkzeugmaschine nach Anspruch 4, **dadurch gekennzeichnet, dass** das erste und zweite Montagehilfsglied (512, 562) nach Art von Achtkant-Außenumfängen ausgebildet sind.

6. Handwerkzeugmaschine nach einem der vorhergehenden Ansprüche, **dadurch gekennzeichnet, dass** der Gewindeverbindung (350) ein Dämpfelement (450) zur Dämpfung von im Bereich der Gewindeverbindung (350) im Betrieb der Handwerkzeugmaschine (100) auftretenden Vibrationen zugeordnet ist.

7. Handwerkzeugmaschine nach Anspruch 6, **dadurch gekennzeichnet, dass** das Dämpfelement (450) einen Anti-Vibrations-Lack aufweist.

8. Handwerkzeugmaschine nach einem der vorhergehenden Ansprüche, **dadurch gekennzeichnet, dass** der Verriegelungsvorrichtung (240) mindestens zwei Verriegelungselemente (311, 312, 313, 314) zugeordnet sind, die in der Verriegelungsposition der Verriegelungshülse (500) von dem Betätigungsglied (510) in eine zugeordnete Verriegelungsstellung beaufschlagt werden.

9. Handwerkzeugmaschine nach einem der vorhergehenden Ansprüche, **dadurch gekennzeichnet, dass** das Betätigungsglied (510) einen äußeren Griffbereich (518) aufweist.

10. Werkzeugaufnahme (150), die eine Mehrkant-Innenaufnahme (290) und eine Mehrkant-Außenaufnahme (210) aufweist, wobei die Mehrkant-Innenaufnahme (290) zur Verbindung mit einem Einsatzwerkzeug (140) ausgebildet ist, das mit einer der Werkzeugaufnahme (150) zugeordneten Verriegelungsvorrichtung (240) in der Mehrkant-Innenaufnahme (290) verriegelbar ist, wobei die Verriegelungsvorrichtung (240) eine Verriegelungshülse (500) aufweist, die zur Entriegelung des Einsatzwerkzeugs (140) gegen eine von einem zugeordneten Federelement (242) aufgebrachte Federkraft in einer von einer zugeordneten Handwerkzeugmaschine (100) wegweisenden, axialen Richtung (499) von einer Verriegelungsposition in eine Entriegelungsposition verschiebbar ist, **dadurch gekennzeichnet, dass** die Verriegelungshülse (500) ein Betätigungsglied (510) und ein Halteglied (560) aufweist, die über eine Gewindeverbindung (350) miteinander verbunden sind, wobei das Halteglied (560) von dem zugeordneten Federelement (242) in Richtung der Verriegelungsposition der Verriegelungshülse (500) beaufschlagt wird und das Betätigungsglied (510) dazu ausgebildet ist, eine Verschiebung der Verriegelungshülse (500) von der Verriegelungsposition in die Entriegelungsposition zu ermöglichen.

## Claims

1. Portable power tool (100) having an output shaft (124) on which a tool receptacle (150) is formed, said tool receptacle (150) having a polygonal inner receptacle (290) and a polygonal outer receptacle (210), wherein the polygonal inner receptacle (290) is configured to be connected to an application tool (140) which is lockable in the polygonal inner receptacle (290) by way of a locking device (240) assigned to the tool receptacle (150), wherein the locking device (240) has a locking sleeve (500) which, in order to unlock the application tool (140), is displaceable from a locking position into an unlocking position counter to a spring force applied by an associated spring element (242) in an axial direction (499) away from the portable power tool (100), **characterized in that** the locking sleeve (500) has an actuating member (510) and a retaining member (560) which are connected together via a threaded connection (350), wherein the retaining member (560) is urged in the direction of the locking position of the locking sleeve (500) by the associated spring element (242) and the actuating member (510) is configured to allow displacement of the locking sleeve (500) from the locking position into the unlocking position.

2. Portable power tool according to Claim 1, **characterized in that** the actuating member (510) has an internal thread (519) that is formed at least regionally in a spiral manner and, in order to form the threaded connection (350), is screwed onto an external thread (569), formed at least regionally in a spiral manner, of the retaining member (560).

3. Portable power tool according to Claim 1, **characterized in that** the actuating member (510) has an internal thread (519) that is formed at least regionally by concentric corrugations and, in order to form the threaded connection (350), is pressed onto an external thread (569), formed at least regionally by concentric corrugations, of the retaining member (560).

4. Portable power tool according to one of the preceding claims, **characterized in that** the actuating member (510) has a first assembly assistance member (512) and the retaining member (560) has a second assembly assistance member (562), wherein the first and second assembly assistance members (512, 562) are configured at least to make it easier to fasten the actuating member (510) to the retaining member (560).

5. Portable power tool according to Claim 4, **characterized in that** the first and second assembly assistance members (512, 562) are configured in the manner of octagonal outer circumferences.

6. Portable power tool according to one of the preceding claims, **characterized in that** the threaded connection (350) is assigned a damping element (450) for damping vibrations that occur in the region of the threaded connection (350) during operation of the portable power tool (100).

7. Portable power tool according to Claim 6, **characterized in that** the damping element (450) has an anti-vibration coating.

8. Portable power tool according to one of the preceding claims, **characterized in that** the locking device (240) is assigned at least two locking elements (311, 312, 313, 314) which are urged into an associated locking position by the actuating member (510) in the locking position of the locking sleeve (500).

9. Portable power tool according to one of the preceding claims, **characterized in that** the actuating member (510) has an external grip region (518).

10. Tool receptacle (150) which has a polygonal inner receptacle (290) and a polygonal outer receptacle (210), wherein the polygonal inner receptacle (290) is configured to be connected to an application tool (140) which is lockable in the polygonal inner receptacle (290) by way of a locking device (240) assigned to the tool receptacle (150), wherein the locking device (240) has a locking sleeve (500) which, in order to unlock the application tool (140), is displaceable from a locking position into an unlocking position counter to a spring force applied by an associated spring element (242) in an axial direction (499) away from an associated portable power tool (100), **characterized in that** the locking sleeve (500) has an actuating member (510) and a retaining member (560) which are connected together via a threaded connection (350), wherein the retaining member (560) is urged in the direction of the locking position of the locking sleeve (500) by the associated spring element (242) and the actuating member (510) is configured to allow displacement of the locking sleeve (500) from the locking position into the unlocking position.

## Revendications

1. Machine-outil à main (100) avec un arbre de sortie (124), sur lequel est formé un logement d'outil (150), qui présente un logement intérieur à plusieurs pans (290) et un logement extérieur à plusieurs pans (210), dans laquelle le logement intérieur à plusieurs pans (290) est configuré en vue de l'assemblage à un outil de travail (140), qui peut être verrouillé dans le logement intérieur à plusieurs pans (290) au moyen d'un dispositif de verrouillage (240) associé au logement d'outil (150), dans laquelle le dispositif de verrouillage (240) présente un mandrin de verrouillage (500), qui peut être déplacé d'une position de verrouillage à une position de déverrouillage pour le déverrouillage de l'outil de travail (140) contre une force de ressort appliquée par un élément de ressort associé (242) dans une direction axiale (499) s'éloignant de la machine-outil à main (100), **caractérisée en ce que** le mandrin de verrouillage (500) présente un organe d'actionnement (510) et un organe de maintien (560), qui sont reliés l'un à l'autre par un assemblage fileté (350), dans laquelle l'organe de maintien (560) est poussé par l'élément de ressort associé (242) en direction de la position de verrouillage du mandrin de verrouillage (500) et l'organe d'actionnement (510) est configuré de façon à permettre un déplacement du mandrin de verrouillage (500) de la position de verrouillage à la position de déverrouillage.

2. Machine-outil à main selon la revendication 1, **caractérisée en ce que** l'organe d'actionnement (510) présente un filet intérieur (519) au moins localement de forme hélicoïdale, qui est vissé sur un filet extérieur (569) au moins localement de forme hélicoïdale de l'organe de maintien (560) pour la formation de l'assemblage fileté (350).

3. Machine-outil à main selon la revendication 1, **caractérisée en ce que** l'organe d'actionnement (510) présente un filet intérieur (519) formé au moins localement d'ondes concentriques, qui est pressé sur un filet extérieur (569) formé au moins localement d'ondes concentriques de l'organe de maintien (560) pour la formation de l'assemblage fileté (350).

4. Machine-outil à main selon l'une quelconque des revendications précédentes, **caractérisée en ce que** l'organe d'actionnement (510) présente un premier auxiliaire de montage (512) et l'organe de maintien (560) présente un deuxième auxiliaire de montage (562), dans laquelle le premier et le deuxième auxiliaires de montage (512, 562) sont configurés pour au moins faciliter une fixation de l'organe d'actionnement (510) sur l'organe de maintien (560).

5. Machine-outil à main selon la revendication 4, **caractérisée en ce que** le premier et le deuxième auxiliaires de montage (512, 562) sont réalisés à la manière de contours extérieurs à huit pans.

6. Machine-outil à main selon l'une quelconque des revendications précédentes, **caractérisée en ce qu'**un élément d'amortissement (450) est associé à l'assemblage fileté (350) pour l'amortissement de vibrations produites dans la région de l'assemblage fileté (350) pendant l'utilisation de la machine-outil à main (100).

7. Machine-outil à main selon la revendication 6, **caractérisée en ce que** l'élément d'amortissement (450) présente une laque anti-vibrations.

8. Machine-outil à main selon l'une quelconque des revendications précédentes, **caractérisée en ce qu'**au moins deux éléments de verrouillage (311, 312, 313, 314) sont associés au dispositif de verrouillage (240), qui sont poussés, dans la position de verrouillage du mandrin de verrouillage (500), par l'organe d'actionnement (510) dans une position de verrouillage associée.

9. Machine-outil à main selon l'une quelconque des revendications précédentes, **caractérisée en ce que** l'organe d'actionnement (510) présente une région de prise extérieure (518).

10. Logement d'outil (150), qui présente un logement intérieur à plusieurs pans (290) et un logement extérieur à plusieurs pans (210), dans lequel le logement intérieur à plusieurs pans (290) est configuré en vue de l'assemblage à un outil de travail (140), qui peut être verrouillé dans le logement intérieur à plusieurs pans (290) avec un dispositif de verrouillage (240) associé au logement d'outil (150), dans lequel le dispositif de verrouillage (240) présente un mandrin de verrouillage (500), qui peut être déplacé d'une position de verrouillage à une position de déverrouillage pour le déverrouillage de l'outil de travail (140) contre une force de ressort appliquée par un élément de ressort associé (242) dans une direction axiale (499) s'éloignant de la machine-outil à main (100), **caractérisée en ce que** le mandrin de verrouillage (500) présente un organe d'actionnement (510) et un organe de maintien (560), qui sont reliés l'un à l'autre par un assemblage fileté (350), dans laquelle l'organe de maintien (560) est poussé par l'élément de ressort associé (242) en direction de la position de verrouillage du mandrin de verrouillage (500) et l'organe d'actionnement (510) est configuré de façon à permettre un déplacement du mandrin de verrouillage (500) de la position de verrouillage à la position de déverrouillage.
